(19) Europäisches Patentamt
European Patent Office
Office européen des brevets

(11) **EP 3 161 996 B1**

(12) **EUROPEAN PATENT SPECIFICATION**

(45) Date of publication and mention of the grant of the patent:
**28.04.2021 Bulletin 2021/17**

(21) Application number: **15811003.1**

(22) Date of filing: **22.06.2015**

(51) Int Cl.:
*H04L 9/32* (2006.01)          *H04L 9/30* (2006.01)
*G09C 1/00* (2006.01)          *H04L 9/08* (2006.01)

(86) International application number:
**PCT/US2015/036937**

(87) International publication number:
**WO 2015/200196 (30.12.2015 Gazette 2015/52)**

(54) **SYSTEM AND DEVICE BINDING METADATA WITH HARDWARE INTRINSIC PROPERTIES**

SYSTEM UND VORRICHTUNG ZUR VERBINDUNG VON METADATEN MIT HARDWARE-INTRINSISCHEN EIGENSCHAFTEN

SYSTÈME ET DISPOSITIF DE LIAISON DE MÉTADONNÉES AUX PROPRIÉTÉS INTRINSÈQUES D'UN MATÉRIEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2014 US 201462017045 P**
**05.05.2015 US 201514704963**

(43) Date of publication of application:
**03.05.2017 Bulletin 2017/18**

(73) Proprietor: **Analog Devices, Inc.**
**Norwood, MA 02062 (US)**

(72) Inventors:
• **WALSH, John**
**Lutz, Florida 33558 (US)**
• **WALLRABENSTEIN, John Ross**
**West Lafayette, Indiana 47906 (US)**

(74) Representative: **Horler, Philip John**
**Withers & Rogers LLP**
**4 More London Riverside**
**London SE1 2AU (GB)**

(56) References cited:
**US-A1- 2003 204 743      US-A1- 2010 122 093**
**US-A1- 2013 046 990      US-A1- 2014 108 786**

• FRIKKEN KEITH B ET AL: "Robust Authentication Using Physically Unclonable Functions", 7 September 2009 (2009-09-07), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 262 - 277, XP047399877, ISSN: 0302-9743 ISBN: 978-3-642-01969-2 * page 265 * * page 269 - page 270 * * page 272 - page 273 *
• SAM KERR ET AL: "PEAR", SECURITY AND PRIVACY IN GIS AND LBS, ACM, 2 PENN PLAZA, SUITE 701 NEW YORK NY 10121-0701 USA, 2 November 2010 (2010-11-02), pages 18-25, XP058230030, DOI: 10.1145/1868470.1868476 ISBN: 978-1-4503-0435-1
• MIKE DUREN ET AL: "Resilient device authentication system (RDAS) through SIOMETRICS", 20130108; 20130108 - 20130110, 8 January 2013 (2013-01-08), pages 1-4, XP058014679, DOI: 10.1145/2459976.2459978 ISBN: 978-1-4503-1687-3
• DWOSKIN, J ET AL.: 'Hardware-rooted Trust for Secure Key Management and Transient Trust'';' PROCEEDINGS OF THE 14TH ACM CONFERENCE: COMPUTER & COMMUNICATIONS SECURITY;, [Online] 02 November 2007, pages 389 - 400, XP055225494 Retrieved from the Internet: <URL:http://palms. princeton .edu/system/files/p389-dwoskin.pdf> [retrieved on 2015-08-25]

**Description**

CROSS REFERENCE TO RELATED APPLICATIONS

This application claims the benefit of the priority of provisional U.S. Patent Applications S.N. 62/017,045 filed June 25, 2014, and U.S. Patent Application S.N. 14/704,963, filed May 5, 2015.

BACKGROUND OF THE INVENTION

Authentication protocols generally rely on private information held by entities in order to establish identity. In traditional systems, the private data may consist of a username and password pair, personal identification numbers (PINs) or cryptographic keys. Multi-factor authentication protocols generally require two or more *kinds* of identifying information such as information the entity *knows* (e.g., a username and password), something the entity *has* (e.g., a smart card or token), and information representing what the entity *is* (e.g., a fingerprint).

Metadata comprises auxiliary information relating to the identity or state of an entity involved in authentication. Examples of metadata include biometric data, sensor output, global positioning data, passwords or PINs and similar auxiliary information that may be used to construct a characterization of an entity's identity or state. Biometric data comprises measurements of physical characteristics of a user (e.g., fingerprints, retina, iris, voice and vein patterns) that are adequately unique to be used as a proof of identity.

Systems that rely on sensor output, however, may be vulnerable to forged sensor output; and while biometric systems utilize a potent property for authentication, they can face challenges relating to the exposure and/or loss of sensitive biometric data. Since a sensor transforms a measured physical characteristic into a binary string, which is stored (enrolled) by the computer system and then compared to the binary strings subsequently generated by the sensor upon authentication requests, without further measures the system cannot distinguish between a string returned from the sensor and a string supplied by an adversary *without the sensor.* Thus for example an adversary may attempt to observe the output of a biometric sensor for a particular user and "clone" the user by supplying the surreptitiously-obtained biometric data to the system. An adversary may similarly attempt to clone a user by reading biometric data stored in the system. Further, since the features utilized in biometric systems tend by definition to be substantially immutable, the compromise of a user's biometric data cannot be remedied in the way that a lost user password can simply be changed.

Characteristics that are unique and intrinsic to individual hardware devices (e.g., wire resistance, initial memory state, CPU instruction timing) can also be extracted and used as part of authentication protocols. A leading example of this is the physical unclonable function (PUF). A PUF function $f(c)$ maps an input domain (or challenges) c to an output range (or response) r, where the mapping is defined based on characteristics unique to the device computing $f(\cdot)$. A circuit or hardware description of $f(\cdot)$ may be identical across all devices, yet the mapping from the domain to the range will be unique based on the specific hardware device executing the circuit computing $f(\cdot)$.

In various device authentication schemes, physical unclonable functions (PUFs) have been used such that each device has a unique identity intrinsically-linked to the device. Rührmair et al. ("Modeling Attacks on Physical Unclonable Functions," Proceedings of the 17th ACM conference on Computer and communications security, CCS '10, pages 237-249, ACM, 2010) define three distinct classes of PUF devices:

- A Weak PUF is typically used only to derive a secret key. The challenge space may be limited, and the response space is assumed to never be revealed. Typical constructions include the SRAM (Holcomb et al., "Initial SRAM State as a Fingerprint and Source of True Random Numbers for RFID Tags," In Proceedings of the Conference on RFID Security, 2007), Butterfly (Kumar et al., "Extended abstract: The Butterfly PUF Protecting IP on Every FPGA," IEEE International Workshop on Hardware-Oriented Security and Trust, pages 67-70, 2008), Arbiter (Lee et al., "A technique to build a secret key in integrated circuits for identification and authentication applications," IEEB Symposium on VLSI Circuits: Digest of Technical Papers, pages 176-179, 2004), Ring Oscillator (Suh et al., "Physical Unclonable Functions for Device Authentication and Secret Key Generation," Proceedings of the 44th annual Design Automation Conference, DAC '07, pages 9-14, ACM, 2007), and Coating (Tuyls et al., "Read-Proof Hardware from Protective Coatings," Proceedings of the 8th international conference on Cryptographic Hardware and Embedded Systems, CHES'06, pages 369-383, Springer, 2006) PUFs.

- A Strong PUF is assumed to be (i) physically impossible to clone, (ii) impossible to collect a complete set of challenge response pairs in a reasonable time (typically taken to be on the order of weeks), and (iii) difficult to predict the response to a random challenge. For example, the super-high information content (SHIC) PUF described by Rührmair ("Applications of High-Capacity Crossbar Memories in Cryptography," IEEE Trans. Nanotechnol., volume 10, no. 3:489-498, 2011) may be considered a Strong PUF.

- A Controlled PUF satisfies all of the criteria for strong PUFs, and additionally implements an auxiliary control unit capable of computing more advanced functionalities to cryptographically augment protocols.

PUF output is noisy in that it varies slightly despite evaluating the same input This is generally addressed with fuzzy extraction, a method developed to eliminate noise in biometric measurements. (See Juels et al., "A Fuzzy Commitment Scheme," Proceedings of the 6th ACM conference on Computer and Communications Security, CCS '99, pages 28-36, ACM, 1999). Fuzzy extraction may in part be employed within a device having a PUF such as within an auxiliary control unit, such that the output is constant for a fixed input. Fuzzy extraction (or reverse fuzzy extraction) may for example employ a "secure sketch," as described by Juels et al. to store a sensitive value $p_i^{\mathbf{priv}}$ to be reconstructed and a helper string helper, for recovering $p_i^{\mathbf{priv}}$. A secure sketch $SS$ for input string $O$, where $ECC$ is a binary $(n, k, 2t + 1)$ error correcting code of length $n$ capable of correcting $t$ errors and $p_i^{\mathbf{priv}} \leftarrow \{0,1\}^k$ is a $k$-bit value, may for example be defined as $SS(O; p_i^{\mathbf{priv}}) = O \oplus ECC(p_i^{\mathbf{priv}}).$ The original value $V$ then may be reproduced given the helper string helper, and an input $O'$ within a maximum Hamming distance $t$ of $O$ using a decoding scheme D for the error-correcting code $ECC$ and $O'$, as $D(\mathbf{helper}_i \oplus O') = D(O \oplus ECC(p_i^{\mathbf{priv}}) \oplus O') = p_i^{\mathbf{priv}}.$

A physical unclonable function $P_d : \{0,1\}^{\kappa_1} \rightarrow \{0,1\}^{\kappa_2}$ bound to a device $d$ preferably exhibits the following properties:

1. Unclonability: $Pr[\text{dist}(y,x) \leq t | x \leftarrow U_{\kappa_1}, y \leftarrow P(x), z \leftarrow P'] \leq \varepsilon_1$, the probability of duplicating PUF P with a clone PUF P' such that their output distributions are $t$-statistically close is less than some sufficiently small $\varepsilon_1$.

2. Unpredictability: It is desirable that an adversary cannot predict a device's PUF response r for a challenge c with more than negligible probability (at least without physical access to the device), and that helper data does not reveal anything to an adversary about PUF responses. Assuming that all entities are bound to probabilistic polynomial-time (PPT), i.e., can only efficiently perform computation requiring polynomially many operations with respect to a global security parameter $\lambda$ (which refers to the number of bits in the relevant parameter), $\mathbf{Adv}_{\mathscr{A}}^{\mathbf{PUF-PRED}}(\kappa_2) := Pr[r = r'],$ denoting the probability of the adversary $\mathscr{A}$ guessing the correct response r of the PUF P to the challenge c, is preferably negligible in $\kappa_2$. This can be assessed, for example, through a game between an adversary $\mathscr{A}$ and a PUF device P: $\{0,1\}^{\kappa_1} \rightarrow \{0,1\}^{\kappa_2}$ mapping input strings from the challenge space $\mathscr{C}_{\mathbf{P}}$ of length $\kappa_1$ to the response space $\mathscr{R}_{\mathbf{P}}$ of length $\kappa_2$ where $\lambda$ is the security parameter for the protocol, given in unary as $1^{\lambda}$.

PUF-PRED: PUF Prediction Game

| Adversary $\mathscr{A}$ | | PUF Device P | |
|---|---|---|---|
| (1) $c_i \in \bar{\mathscr{C}}_{\mathbf{P}} \subset \mathscr{C}_{\mathbf{P}}, \ 0 \leq i \leq \text{poly}(\lambda)$ | $\rightarrow$ | | |
| | $\leftarrow$ | $r_i = \mathrm{P}(c_i) \in \bar{\mathscr{R}}_{\mathbf{P}} \quad \bar{\mathscr{R}}_{\mathbf{P}} \subset \mathscr{R}_{\mathbf{P}}, \ 0 \leq i \leq \text{poly}(\lambda)$ | (2) |
| (3) Challenge $\mathbf{c} \notin \bar{\mathscr{C}}_{\mathbf{P}}$ | $\rightarrow$ | | |
| (4) $c_i' \in \bar{\mathscr{C}}_{\mathbf{P}}' \subset \mathscr{C}_{\mathbf{P}}, \ \mathbf{c} \notin \bar{\mathscr{C}}_{\mathbf{P}}', \ 0 \leq i \leq \text{poly}(\lambda)$ | $\rightarrow$ | | |
| | $\leftarrow$ | $r_i' = \mathrm{P}(c_i') \in \bar{\mathscr{R}}_{\mathbf{P}}' \quad \bar{\mathscr{R}}_{\mathbf{P}}' \subset \mathscr{R}_{\mathbf{P}}, \ 0 \leq i \leq \text{poly}(\lambda)$ | (5) |

(continued)

| Adversary $\mathscr{A}$ | PUF Device P |
|---|---|
| **(6)** $\quad$ Guess $\mathbf{r'} \overset{?}{\leftarrow} \mathrm{P}(\mathbf{c})$ $\qquad \rightarrow$ | |

The game proceeds as follows:

1. The adversary $\mathscr{A}$ issues polynomially many (w.r.t. the security parameter $\lambda$) challenges $c_i \in \bar{\mathscr{C}}_{\mathbf{P}}$ to the PUF device P, where the challenge set $\bar{\mathscr{C}}_{\mathbf{P}}$ is a proper subset of the entire challenge space $\mathscr{C}_{\mathbf{P}}$.

2. The PUF device P returns the responses $\{r_i | r_i \leftarrow P(c_i)\}$ to $\mathscr{A}$.

3. The adversary $\mathscr{A}$ eventually outputs a challenge c that was not in the original set of challenge queries $\bar{\mathscr{C}}_{\mathbf{P}}$. The adversary is not allowed to query the PUF device P on the committed challenge c.

4. The adversary $\mathscr{A}$ may once again issue a new set of polynomially many challenges $c_i' \in \bar{\mathscr{C}}_{\mathbf{P}}'$ to the PUF device P. The adversary is not allowed to query the PUF device P on the committed challenge c.

5. The PUF device P returns the responses $\{r_i' | r_i' \leftarrow P(c_i')\}$ to $\mathscr{A}$.

6. The adversary $\mathscr{A}$ eventually outputs a *guess* r' for P's response to the committed challenge c.

The adversary only wins the game when guess r' is equal to P's actual response $r \leftarrow P(c)$ to $\mathscr{A}$'s committed challenge c. (As noted, the PUF's output is noisy and will vary slightly on any fixed input, so the equality is typically taken with respect to the output of a fuzzy extractor (e.g., Dodis et al.,"Fuzzy Extractors: How to Generate Strong Keys from Biometrics and Other Noisy Data," SIAMJ. Comput., volume 38, no. 1:97-139, 2008)).

3. Robustness: $Pr[\text{dist}(y,z) > t | x \leftarrow U_{\kappa_1}, y \leftarrow P(x), z \leftarrow P(x)] \leq \varepsilon_2$, i.e., the probability of a fixed PUF P yielding responses t-distant on the same input x is less than some sufficiently small $\varepsilon_2$.

4. Indistinguishability: The output of the PUF device (typically fuzzy extractor output) preferably is computationally indistinguishable from a random string of the same length $\ell$, such that a PPT adversary $\mathscr{A}$'s advantage $\mathbf{Adv}_{\mathscr{A}}^{\mathbf{PUF\text{-}IND}}(\ell)$ is at most negligibly more than $\frac{1}{2}$. The indistinguishability of a PUF can be assessed, for example, through a game in which an adversary $\mathscr{A}$ is asked to differentiate between the output r of the fuzzy extractor for a PUF P and a randomly chosen string $s \in \{0,1\}^\ell$ of the same length $\ell$.

PUF-IND: PUF Indistinguishability Game

| Adversary $\mathscr{A}$ | | PUF Device P | |
|---|---|---|---|
| **(1)** $\quad c_i \in \mathscr{CH} \subset \mathscr{C}_{\mathrm{P}}, \; 0 \leq i \leq \text{poly}(\lambda)$ | $\rightarrow$ | $R_i \leftarrow \text{rand} \in \{0,1\}^\lambda \; H_i \leftarrow ECC(R_i) \oplus P(c)$ | |
| | $\leftarrow$ | $H_i \in \bar{\mathscr{R}}_{\mathrm{P}} \subset \mathscr{R}_{\mathrm{P}}, \; 0 \leq i \leq \text{poly}(\lambda)$ | **(2)** |
| **(3)** $\quad c_i \in \bar{\mathscr{CH}} \subset \mathscr{C}_{\mathrm{P}}, \; 0 \leq i \leq \text{poly}(\lambda)$ | $\rightarrow$ | | |
| | $\leftarrow$ | $R_i \in \bar{\mathscr{R}}_{\mathrm{P}} \subset \mathscr{R}_{\mathrm{P}}, \; 0 \leq i \leq \text{poly}(\lambda)$ | **(4)** |
| **(5)** $\quad$ Challenge $\mathbf{c} \notin \bar{\mathscr{CH}}$ | $\rightarrow$ | $b \in \{0,1\}$ | |

(continued)

| Adversary $\mathscr{A}$ | PUF Device P | |
|---|---|---|
| | $\leftarrow$     $b(s \in \{0,1\}^{\ell}) + (1-b)(R_i), R_i = D(H_i \oplus P(\mathbf{c}))$ | (6) |
| (7)    $c_i' \in \mathscr{CH} \subset \mathscr{C}_{\mathrm{P}}, \ \mathbf{c} \neq c_i',\ _{0 \leq i \leq \mathrm{poly}(\lambda)}$ | $\rightarrow$ | |
| | $\leftarrow$     $R_i' \in \bar{\mathscr{R}}_{\mathrm{P}} \subset \mathscr{R}_{\mathrm{P}}, \ _{0 \leq i \leq \mathrm{poly}(\lambda)}$ | (8) |
| (9)    Guess $\mathbf{b'} \overset{?}{=} b$ | $\rightarrow$ | |

This game proceeds as follows:

1. Adversary $\mathscr{A}$ executes the enrollment phase on any challenge $c_i \in \mathscr{C}_{\mathbf{P}}$.

2. The PUF device returns the corresponding helper string $H_i$, which blinds the error corrected sensitive value $ECC(R_i)$ with the output of the PUF P(c). Denote this set of challenge-helper pairs $(c_i, H_i)$ as $\mathscr{CH}$.

3. Adversary $\mathscr{A}$ now requests the PUF response $r_i = P(c_i)$ for any $c_i \in \mathscr{CH}$. Denote the set of requested challenges in this step $\bar{\mathscr{CH}}$.

4. For all requests $c_i \in \bar{\mathscr{CH}}$, the PUF device returns the set $\{r_i | r_i \leftarrow P(c_i)\}$.

5. Adversary $\mathscr{A}$ selects a challenge $\mathbf{c} \notin \bar{\mathscr{CH}}$, such that $\mathscr{A}$ has $H_i$ but not $R_i$ for c. The PUF device chooses a bit $b \in \{0,1\}$ uniformly at random.

6. If $b = 0$, $\mathscr{A}$ is given $R_i = D(H_i \oplus P(\mathbf{c}))$. Otherwise, if $b = 1$ then $\mathscr{A}$ is given a random string $s \in \{0,1\}^{\ell}$.

7. Adversary $\mathscr{A}$ is allowed to query the PUF device for $c_i' \in \mathscr{CH}$ so long as no $c_i' = \mathbf{c}$.

8. For all requests $c_i' \neq \mathbf{c}$, the PUF device returns the set $\{r_i' | r_i' \leftarrow P(c_i')\}$.

9. The adversary outputs a guess bit $\mathbf{b'}$, and succeeds when $\mathbf{b'} = b$.

Related assessments of PUFs are provided by Hori et al., "Quantitative and Statistical Performance Evaluation of Arbiter Physical Unclonable Functions on FPGAs," 2010 International Conference on Reconfigurable Computing and FPGAs (ReConFig), pages 298-303, 2010; Maiti, A Systematic Approach to Design an Efficient Physical Unclonable Function, dissertation, Virginia Tech, 2012, and others.

Various authentication schemes utilize zero knowledge proofs of knowledge, which is a method for proving that a given statement is true, while revealing nothing beyond this fact. The zero knowledge proof is an interaction between two parties: a *prover* $\mathscr{P}$ that wishes to establish the validity of a statement, and a *verifier* $\mathscr{V}$ that must be convinced the statement is true. The verifier should be convinced with overwhelming probability that a true statement is indeed true. With a zero knowledge proof of knowledge, the verifier could not use the messages from a previous proof to convince a new party of the statement's validity, and the messages reveal only a single bit of information: whether or not the prover $\mathscr{P}$ possesses the secret. There are two general classes of zero knowledge proofs: *interactive* zero knowledge proofs, where a series of messages are exchanged between the prover $\mathscr{P}$ and verifier $\mathscr{V}$, and *non-interactive* zero knowledge proofs, where the prover $\mathscr{P}$ conveys a single message $\mathscr{M}$ *without* interaction with $\mathscr{V}$, yet $\mathscr{V}$ is convinced that $\mathscr{P}$ possesses the secret. Many (interactive) zero knowledge proof systems require multiple iterations to establish the validity of a statement. That is, each interaction may succeed with some probability, even if the prover does not possess the secret (or the statement is false). Thus, if the probability of success when the statement is false is p, the protocol is run *n* times until $1 - (p)^n$ is sufficiently close to 1.

U.S. Patent Nos. 8,577,091 to Ivanov et al. and 8,566,579 to Armstrong et al. describe authentication systems wherein intrinsic hardware characteristics (e.g., PUF output) as well as human biometrics are required to successfully complete an authentication, but neither provide a method for inexorably linking the PUF with the authentication or a method for handling non-sensitive sensor output.

Frikken et al. ("Robust Authentication using Physically Unclonable Functions," Information Security, volume 5735 of Lecture Notes in Computer Science, pages 262-277, Springer, 2009) teach a method for combining metadata (e.g., PIN) into the input of a PUF, but does not provide an extension to arbitrary metadata (e.g., biometrics) or non-sensitive metadata (e.g., temperature, pressure).

Rust (editor) in "D1.1 Report on use case and architecture requirements," Holistic Approaches for Integrity of ICT-Systems (2013) mentions the idea of merging biometric features with a cell-based PUF, but does not elaborate on a means for achieving this.

U.S. Patent Application Publication No. 20110002461 to Erhart et al. describes a method for authenticating sensor output by employing a PUF, which extracts unique characteristics of the physical sensor hardware. The method does not directly link the output of the sensor to the authentication of the hardware, however, and also requires that sensitive biometric sensor output leave the device.

Sam Kerr Et Al: "REAR", Security and Privacy in GIS and LBS, ACM, 2 Penn Plaza, Suite 701, New York Ny, 10121-0701 USA, 2 November 2010, pages 18-25 discloses a hardware based protocol authentication system.

## SUMMARY OF THE INVENTION

An intrinsic identity of a device is constructed by generating an enrollment token or public key, which is based on intrinsic characteristics unique to the device such as a physical unclonable function (PUF). An authentication system utilizes the device's enrollment token or public key to verify the device's authenticity, preferably through a zero knowledge proof. Sensitive metadata is preferably also incorporated into the enrollment token or public key, which may be accomplished through an algorithmic means such as a hash function combining the metadata with hardware-intrinsic (e.g., PUF) data. The authentication may be interactive or non-interactive

According to the present invention, there are provided a method and apparatus according to the independent claims.

## BRIEF DESCRIPTION OF THE DRAWING

Fig. 1 is a functional diagram illustrating metadata binding operational flow in an embodiment of the present invention; and

Fig. 2 is a functional diagram illustrating an embodiment that provides zero knowledge proof generation for arbitrary sensor output.

## DETAILED DESCRIPTION OF EMBODIMENTS

Although the invention applies to metadata generally, an exemplary embodiment utilizing biometric sensors is described. The present invention is also described with reference to the example of an embodiment utilizing elliptic curve cryptography (including the associated terminology and conventions), but the inventive concept and teachings herein apply equally to various other cryptographic schemes such as ones employing different problems like discrete logarithm or factoring, and the invention is not limited by the various additional features described herein that may be employed with or by virtue of the invention.

In order to construct an intrinsic identity of a device, a public representation of the device's identity (referred to here as an *enrollment token* or public key) is generated. In this process of *device enrollment,* a cryptographic enrollment token is collected from the device. An elliptic curve mathematical framework for enrollment and authentication may be used, but other suitable frameworks (e.g., discrete logarithm frameworks) will provide the same functionality. A cryptographic enrollment token (or series of tokens) $\{(c_i, P_i, A_i \bmod p)\}$ is collected from the PUF device in response to a challenge query $c_i$ (or queries) by the server. In one embodiment, the device chooses a private key $p_i^{\mathbf{priv}}$ uniformly at random from the space $\{0,1\}^{\lambda}$, where $\lambda$ is the security parameter (e.g., the number of bits in the modulus p) and calculates

$$A_i = p_i^{\mathbf{priv}} \cdot G$$

mod p as the device's public key, where G is a base point of order q on an elliptic curve over $\mathbb{F}_p$. Using Algorithm 1, a device can optionally perform a local enrollment protocol using the PUF without interacting with a server. This allows each PUF circuit to generate a local public key $p_i^{\text{pub}}$. This can also be useful in bootstrapping more complex key setup algorithms; though bootstrapping may be unnecessary if key setup is performed internally within the device (rather than externally among a set of distinct devices). In another embodiment, the device may accept elliptic curve parameters and a challenge from an external server, with the server subsequently storing the challenge and helper data for the device.

---

**Algorithm 1** Enrollment

---

**for** Device $d$ **do**
    Select finite field $\mathbb{F}_p$ of order $p$
    Select $E$, an elliptic curve over $\mathbb{F}_p$
    Find $G \in E/\mathbb{F}_p$, a base point of order $q$
    $c_i \in \mathbb{F}_p$, a group element
    $x = H(c_i, G, p, q)$
    $O = PUF(x)$
    $\text{helper}_i = O \oplus \text{ECC}(p_i^{\text{priv}} \mod q)$
    $p_i^{\text{pub}} = A_i = p_i^{\text{priv}} \cdot G \mod p$
    Store $\{p_i^{\text{pub}}, c_i, \text{helper}_i\}$
**end for**

---

In the example of an embodiment employing elliptic curve cryptography, Algorithms 2 and 3 below can optionally be used to allow a PUF-enabled device to store and retrieve a sensitive value *without* storing any sensitive information in non-volatile memory. Algorithm 2 illustrates the storing of a sensitive value $p_i^{\text{priv}}$ using a PUF, and Algorithm 3 illustrates the dynamic regeneration of $p_i^{\text{priv}}$. The challenge $c_i$ and helper data helper$_i$ can be public, as neither reveals anything about the sensitive value $p_i^{\text{priv}}$. These values may be stored locally to the device, or externally on a different device. If stored externally, the values would be provided to the device prior to running the algorithm. While the present example uses encryption of $p_i^{\text{priv}}$ by exclusive-or, $\oplus$, $p_i^{\text{priv}}$ could also be used as a key to other encryption algorithms (e.g., AES) to enable storage and retrieval of arbitrarily sized values.

---

**Algorithm 2** PUF-Store

---

**Goal:** Store value $p_i^{\text{priv}}$
**for** PUF Device $d$ **do**
    $x = H(c_i, G, p, q)$
    $O = PUF(x)$
    $\text{helper}_i = O \oplus \text{ECC}(p_i^{\text{priv}})$
    Write $\{c_i, \text{helper}_i\}$
**end for**

---

---

**Algorithm 3** PUF-Retrieve

---

**Goal:** Retrieve value $p_i^{\text{priv}}$

**for** PUF Device $d$ **do**

  Read $\{c_i, \text{helper}_i\}$

  $x \leftarrow H(c_i, G, p, q)$

  $O' = PUF(x)$

  $p_i^{\text{priv}} \leftarrow D(\text{helper}_i \oplus O') = D((ECC(p_i^{\text{priv}}) \oplus O) \oplus O')$

**end for**

---

Whenever O and *O'* are t-close, the error correcting code *ECC* can be passed to a decoding algorithm D which will recover the sensitive value $\boldsymbol{p_i^{\text{priv}}}$.

In an elliptic curve embodiment, upon receiving an authentication request from a device, the server can conduct an elliptic curve variant of Chaum et al.'s ("An Improved Protocol for Demonstrating Possession of Discrete Logarithms and some Generalizations," Proceedings of the 6th annual international conference on Theory and application of cryptographic techniques, EUROCRYPT'87, pages 127-141, Springer, 1988) zero knowledge proof protocol with the device *d* in order to authenticate the device *d,* as shown in Algorithm 4.

---

**Algorithm 4** Authentication

---

**for** PUF Device $d$ **do**

  Server $s \leftarrow$ request

**end for**

**for** Server $s$ **do**

  Device $d \leftarrow \{c_i, \text{helper}_i, G, p, q, N\}$ where $N$ is a nonce

**end for**

**for** PUF Device $d$ **do**

  $x \leftarrow H(c_i, G, p, q)$

  $p_i^{\text{priv}} \leftarrow D(\text{helper}_i \oplus PUF(x))$

  $A_i = p_i^{\text{priv}} \cdot G \mod p$

  $r \leftarrow \text{random} \in \mathbb{F}_p$, a random group element

  $B \leftarrow r \cdot G \mod p$

  $c \leftarrow \text{Hash}(G, B, A_i, N)$

  $m \leftarrow r + c \cdot p_i^{\text{priv}} \mod q$

  Server $s \leftarrow \{B, m\}$

**end for**

**for** Server $s$ **do**

  $c' \leftarrow \text{Hash}(G, B, A_i, N)$

  $P \leftarrow m \cdot G - c' \cdot A_i \mod p$

  Device $d \leftarrow \begin{cases} \text{accept} & : P = B \\ \text{deny} & : P \neq B \end{cases}$

**end for**

---

The verifying server in Algorithm 4 provides the device a *nonce* value specific to the current proof, so as to prevent an eavesdropping adversary from using previous proofs from a valid device to successfully complete an authentication protocol and masquerade as the device. A *non-interactive* zero knowledge proof removes this communication requirement, and allows the proof to be completed without interacting with the verifying end point. Achieving a non-interactive construction requires the proving device to generate the nonce on behalf of the verifier in a manner that prevents the proving end device from manipulating the proof.

One method for constructing a non-interactive zero knowledge proof is for the device to construct a nonce N as $N \leftarrow R(A\|\tau)$, where A is the device's public key, $H(\cdot)$ is a cryptographic hash function, $\tau$ is a timestamp and $x\|y$ denotes concatenation *of x and y*. The timestamp ensures that previous proofs constructed by the proving device cannot be replayed by an adversary in the future, while the hash function ensures that the proving device cannot manipulate the nonce in an adversarial manner. The reliance on timestamps is substantially less onerous than reliance on globally synchronized clocks. That is, the timestamp need not match the current timestamp on arrival at the prover exactly, which eliminates the potential of network delay to affect the proof. Rather, the verifying end point checks that the timestamp is reasonably current (e.g., second granularity) and monotonically increasing to prevent replay attacks. An exemplary non-interactive zero knowledge proof for a PUF-enabled device is described in Algorithm 5.

---

**Algorithm 5** Non-Interactive Authentication

---

**for** PUF Device $d$ **do**

$p_i^{\mathrm{priv}} \leftarrow \mathrm{PUF\text{-}Retrieve}(c_i, \mathrm{helper}_i)$

$A_i = p_i^{\mathrm{priv}} \cdot G \mod p$

$r \leftarrow \mathrm{random} \in \mathbb{F}_p$, a random group element

$B \leftarrow r \cdot G \mod p$

$N \leftarrow \mathrm{Hash}(A\|\tau)$ where $\tau$ is the current timestamp

$c \leftarrow \mathrm{Hash}(G, B, A_i, N)$

$m \leftarrow r + c \cdot p_i^{\mathrm{priv}} \mod q$

Server $s \leftarrow \{B, m, \tau\}$

**end for**

**for** Server $s$ **do**

$A_i = p_i^{\mathrm{priv}} \cdot G \mod p$ (public key stored from device enrollment)

Verify $\tau$ is reasonably current (e.g., $\tau = \mathrm{current\ time} - \epsilon$)

$N \leftarrow \mathrm{Hash}(A\|\tau)$

$c' \leftarrow \mathrm{Hash}(G, B, A_i, N)$

$P \leftarrow m \cdot G - c' \cdot A \mod p$

Device $d \leftarrow \begin{cases} \mathrm{accept} & : P = B \\ \mathrm{deny} & : P \neq B \end{cases}$

**end for**

---

Metadata Binding

Let *metadata binding* refer to the process of incorporating auxiliary metadata into the authentication process. Metadata is arbitrary auxiliary information upon which the authentication protocol should depend. That is, without the correct metadata, the authentication should fail. Metadata may be characterized as either *sensitive* or *non-sensitive,* where sensitive metadata should not leave the device (e.g., password, PIN, biometric) and non-sensitive metadata may leave the device (e.g., sensor output on temperature, pressure).

Sensitive metadata is preferably incorporated into the public identity token created during enrollment For example, when no sensitive metadata is provided, device enrollment outputs a public identity that characterizes only the device. However, when sensitive metadata is provided during enrollment (e.g., biometrics, PIN, etc.), the public identity characterizes both the device and the sensitive metadata. One embodiment of the invention never requires the sensitive metadata to leave the device, as the zero knowledge proof protocol is completed without the verifier having access to the sensitive metadata.

Non-sensitive metadata is preferably not incorporated into the enrollment process such that the public identity output from enrollment does not depend on non-sensitive metadata (e.g., sensor output for temperature, pressure, etc.). Rather, non-sensitive metadata is preferably incorporated into the zero knowledge proof protocol, such that the proof of device and/or user authenticity is only valid if the corresponding non-sensitive metadata is also provided to the verifier. This allows the device and/or user to have a single public identity, and yet a verifier given access to the non-sensitive metadata can verify both the authenticity of the device and/or user as well as the origin of the metadata.

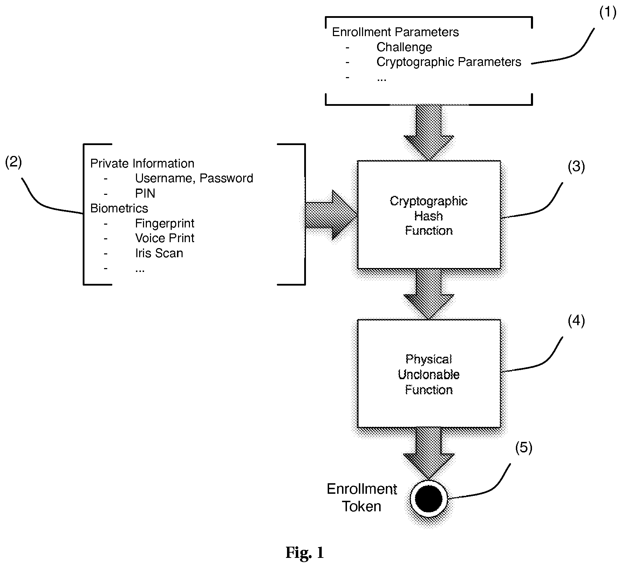

Fig. 1 illustrates the process flow of metadata binding. First, Enrollment Parameters 1 are retrieved and may be combined with Sensitive Metadata 2 through a Cryptographic Hash Function 3. The output of the cryptographic hash function is used as input to the Physical Unclonable Function 4, which links the enrollment parameters and optional metadata to the hardware identity. Finally, an Enrollment Token 5 is returned as a function of the PUF output.

In general, a hash function is defined as $H(\cdot) : \{0,1\}^* \mapsto \{0,1\}^\lambda$, where $\lambda$ is a fixed constant That is, a hash function $H(\cdot)$ (or written explicitly as Hash$(\cdot)$) takes an input of arbitrary size, and maps to a finite output domain. For cryptographic settings, hash functions must satisfy additional properties. In the context of binding metadata in authentication protocols, a hash function should preferably be one-way, collision-resistant, and satisfy an avalanche condition. One-way means that it is computationally infeasible to determine the input $x$ when given the output $H(x)$, ensuring the output $H(x)$ does not reveal anything about the input x. Collision-resistant means that it is computationally infeasible to provide a different set of metadata y such that $H(x) = H(y)$, where $x$ is the proper metadata for a given entity. The avalanche condition means that each bit of $H(\bar{x})$ is complemented from $H(x)$ with probability $\frac{1}{2}$, where $x$ is any hash input and $\bar{x}$ is $x$ with a single bit complemented, ensuring that the output $H(x)$ changes substantially in response to a minor change to the input x, which allows any change to the metadata to be detected and force a failed authentication.

One way to bind the metadata $\mathcal{M}_i$ is to simply redefine the PUF input $x$ as $H(c_i, \mathcal{M}_i, G, p, q)$ rather than $H(c_i, G, p, q)$. Thus, the revised Enrollment Algorithm 6 becomes:

---

**Algorithm 6** Metadata Enrollment

---

**for** Device $d$ **do**

    Select finite field $\mathbb{F}_p$ of order $p$

    Select $E$, an elliptic curve over $\mathbb{F}_p$

    Find $G \in E/\mathbb{F}_p$, a base point of order $q$

    Retrieve Metadata $\mathcal{M}_i$

    $c_i \in \mathbb{F}_p$, a group element

    $x = H(c_i, \mathcal{M}_i, G, p, q)$

    $O = PUF(x)$

    $\text{helper}_i = O \oplus \text{ECC}(p_i^{\text{priv}} \bmod q)$

    $p_i^{\text{pub}} = A_i = p_i^{\text{priv}} \cdot G \bmod p$

    Store $\{p_i^{\text{pub}}, c_i, \text{helper}_i\}$

**end for**

---

Various other permutations of values (pertinent to the mathematical framework used) may be hashed to produce a PUF input incorporating metadata, however, and moreover one or more values could be iteratively hashed and/or hashed values nested (e.g., $H(H(c_i\|\mathcal{M}_i), G, p, q)$, etc.). Further, other methods for linking and/or combining the parameters (e.g., an all-or-nothing transformation) may be employed.

Due to the avalanche property of hash functions, the metadata must be exactly the same in order for the authentication to succeed. However, the exemplary embodiment of biometric authentication frequently results in *noise,* where scans differ slightly despite observing the same characteristic (e.g., fingerprint, iris, etc.). Thus, means such as a fuzzy extractor may preferably be employed to ensure that the biometric reliably returns a constant value. For example, a constant value $\mathcal{M}_i$ for the metadata may be chosen and linked to an associated public helper data value $h_i^{\mathcal{M}}$. A noisy biometric scan $\mathcal{S}$ can then be used to compute $h_i^{\mathcal{M}} \leftarrow ECC(\mathcal{M}_i) \oplus \mathcal{S}$ where *ECC* is an error correcting code, and given access to a new biometric scan $\mathcal{S}'$ that is *t*-close to $\mathcal{S}$, the constant value $\mathcal{M}_i$ can be recovered by computing $\mathcal{M}_i \leftarrow D(h_i^{\mathcal{M}} \oplus \mathcal{S}')$, where D is the corresponding error decoding algorithm.

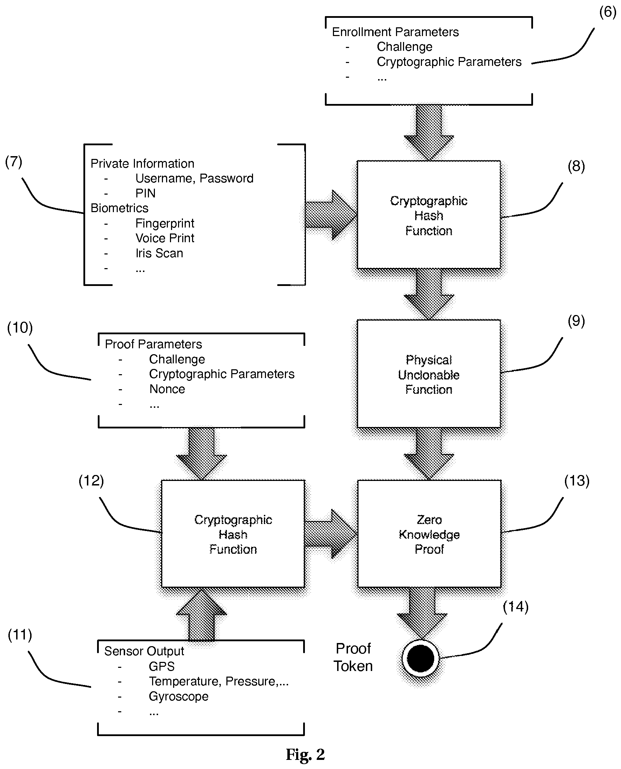

Fig. 2 illustrates the process flow of constructing a zero knowledge proof demonstrating sensor integrity, user authentication, and sensor output verification in an embodiment utilizing a biometric authentication sensor (e.g., fingerprint scanner). The hardware may be part of a module (e.g., U.are.U 4500) or limited to only a sensor (e.g., TCS4K Swipe Sensor). Preferably, the PUF circuit (e.g., a ring oscillator, SRAM, arbiter, etc.) will be directly integrated with the sensor hardware, such that modification to the sensor hardware alters the PUF mapping. One embodiment of such a device may comprise a XilinxArtix 7 field programmable gate array (FPGA) platform, equipped, e.g., with 215,000 logic cells, 13 Megabytes of block random access memory, and 700 digital signal processing (DSP) slices. In an embodiment employing elliptic curve cryptography, for example, the hardware mathematics engine may be instantiated in the on-board DSP slices, with the PUF construction positioned within the logic cells, and a logical processing core including an input and output to the PUF and constructed to control those and the device's external input and output and to perform algorithms (sending elliptic curve and other mathematical calculations to the math engine) such as those described above.

First, Enrollment Parameters 6 are retrieved and may be combined with Sensitive Metadata 7 through a Cryptographic Hash Function 8. The output of the cryptographic hash function is used as input to the Physical Unclonable Function 9, which links the enrollment parameters and sensitive metadata to the hardware identity. Next, the Proof Parameters 10 and Sensor Output 11 are linked through a Cryptographic Hash Function 12. The output of Physical Unclonable Function 9 and Cryptographic Hash Function 12 are synthesized to generate a Zero Knowledge Proof 13, which outputs a Proof Token 14 that will convince a verifier of the integrity of the sensor, authenticate the user, and validate the sensor output

Algorithm 7 provides an example of how a fingerprint scan may be bound to the authentication protocol such that both the device and fingerprint must match those originally enrolled. Non-sensitive metadata (e.g., sensor output for temperature, pressure, etc.) $\mathcal{M}_i^{\mathrm{pub}}$ may be incorporated into the non-interactive authentication algorithm by incorporating it into the construction of the nonce N, and providing $\mathcal{M}_i^{\mathrm{pub}}$ to the verifier. Thus, the verifier is only able to construct the nonce N (and, consequently, the variable $c'$) if $\mathcal{M}_i^{\mathrm{pub}}$ matches the output from the sensor.

---

**Algorithm 7** Device & Fingerprint Authentication

---

**for** User **do**
    Scan Fingerprint
    $\bar{FP} \leftarrow \mathrm{Scan}$
    Read Fingerprint Helper Data $h_i^{\mathcal{M}}$
    $\mathcal{M}_i^{FP} \leftarrow ECC(h_i^{\mathcal{M}} \oplus \bar{FP})$
**end for**
**for** PUF Device $d$ **do**
    $p_i^{\mathrm{priv}} \leftarrow \mathrm{PUF\text{-}Retrieve}(c_i, \mathcal{M}_i^{FP}, \mathrm{helper}_i)$
    $A_i = p_i^{\mathrm{priv}} \cdot G \mod p$
    $r \leftarrow \mathrm{random} \in \mathbb{F}_n$, a random group element
    $B \leftarrow r \cdot G \mod p$
    $N \leftarrow \mathrm{Hash}(A \| \mathcal{M}_i^{\mathrm{pub}} \| \tau)$ where $\tau$ is the current timestamp
    $c \leftarrow \mathrm{Hash}(G, B, A, N)$
    $m \leftarrow r + c \cdot p_i^{\mathrm{priv}} \mod q$
    Server $s \leftarrow \{B, m, \mathcal{M}_i^{\mathrm{pub}}, \tau\}$
**end for**
**for** Server $s$ **do**
    $A_i = p_i^{\mathrm{priv}} \cdot G \mod p$ (public key stored from device enrollment)
    $N \leftarrow \mathrm{Hash}(A \| \mathcal{M}_i^{\mathrm{pub}} \| \tau)$
    $c' \leftarrow \mathrm{Hash}(G, B, A, N)$
    $P \leftarrow m \cdot G - c' \cdot A \mod p$
    Device $d \leftarrow \begin{cases} \mathrm{accept} & : P = B \\ \mathrm{deny} & : P \neq B \end{cases}$
**end for**

---

First, a user's fingerprint scan $FP$ is used in combination with the helper data $h_i^{\mathcal{M}}$ for the original fingerprint scan FP to recover the metadata value $\mathcal{M}_i$. Next, the metadata value $\mathcal{M}_i$ is used as input to the PUF, such that the PUF output depends on the metadata. In order to bind non-sensitive metadata $\mathcal{M}_i^{\mathrm{pub}}$ to the proof, it is used to construct the nonce N, which depends on the public identity A as well as the current timestamp $\tau$ (which prevents replay attacks). The non-sensitive metadata $\mathcal{M}_i^{\mathrm{pub}}$ is then provided to the verifier, as it is now necessary to verify the proof. (If the non-sensitive metadata should only be revealed to the verifier, it may be sent encrypted). Finally, the device constructs the non-interactive zero knowledge proof, which enables the server to verify if both the device and (sensitive and non-sensitive) metadata are correct.

An interactive zero knowledge proof may also be constructed by requiring the server to issue a nonce N to the device. This exemplary construction is illustrated in Algorithm 8.

---

**Algorithm 8** Interactive Device & Fingerprint Authentication

---

**for** Server $s$ **do**

  Send nonce $N \in \{0,1\}^{\lambda}$ to Device, where $\lambda$ is the number of bits in the modulus $p$

**end for**

**for** User **do**

  Scan Fingerprint

  $\bar{FP} \leftarrow$ Scan

  Read Fingerprint Helper Data $h_i^{\mathcal{M}}$

  $\mathcal{M}_i^{FP} \leftarrow ECC(h_i^{\mathcal{M}} \oplus \bar{FP})$

**end for**

**for** PUF Device $d$ **do**

  $p_i^{\mathrm{priv}} \leftarrow$ PUF-Retrieve($c_i, \mathcal{M}_i^{FP}, \mathrm{helper}_i$)

  $A_i = p_i^{\mathrm{priv}} \cdot G \bmod p$

  $r \leftarrow \mathrm{random} \in \mathbb{F}_p$, a random group element

  $B \leftarrow r \cdot G \bmod p$

  $c \leftarrow \mathrm{Hash}(G, B, A_i, N)$

  $m \leftarrow r + c \cdot p_i^{\mathrm{priv}} \bmod q$

  Server $s \leftarrow \{B, m, \mathcal{M}_i^{\mathrm{pub}}\}$

**end for**

**for** Server $s$ **do**

  $A_i = p_i^{\mathrm{priv}} \cdot G \bmod p$ (public key stored from device enrollment)

  $c' \leftarrow \mathrm{Hash}(G, B, A_i, N)$

  $P \leftarrow m \cdot G - c' \cdot A_i \bmod p$

  Device $d \leftarrow \begin{cases} \mathrm{accept} & : P = B \\ \mathrm{deny} & : P \neq B \end{cases}$

**end for**

---

The addition of (sensitive and/or non-sensitive) metadata is optional in embodiments of the invention. That is, non-sensitive metadata may be included while sensitive metadata is excluded. This requires only that the public identity token did not incorporate the sensitive metadata. Similarly, sensitive metadata may be included while non-sensitive metadata is excluded. This requires only that the nonce is not constructed using non-sensitive metadata.

As one embodiment of the present invention relies on an elliptic curve mathematical framework, one skilled in the art will realize that it may be extended to support cryptographically-enforced role based access control (RBAC). That is, data access policies and device credentials may be specified mathematically, and the RBAC algorithm computes a function $f(\mathcal{P}, \mathcal{C}) \mapsto \{0,1\}$ mapping policies $\mathcal{P}$ and credentials $\mathcal{C}$ to an access decision in $\{0,1\}$. This is typically accomplished by constructing a bilinear pairing (e.g., Weil or Tate pairing), and is a natural extension of the present invention.

While the foregoing embodiments have been described with various features, one of ordinary skill in the art will recognize that, the authentication protocol need not be limited to zero knowledge, and could be based on other cryptographic constructions for establishing identity. For example, the device could use its hardware identity to digitally sign the contents of a packet, and include this signature in the packet header (e.g., TCP Options Header, where an example header would include $\{B = r \cdot G \bmod p, m = r + \text{Hash}(G, B, A, N). \text{rand} \bmod q, \tau\}$) and the hardware identity may be applied to a variety of other cryptographic authentication techniques, and need not be limited by the zero knowledge aspect of the example provided.

## Claims

1.  A device configured to bind authentication-related metadata with hardware intrinsic properties, the device having associated device enrollment parameters (6) and associated authentication-related metadata, and comprising

    a) a hardware root of trust (9); and
    b) a processor connected to the hardware root of trust, the processor configured to:

    i) combine device enrollment parameters associated with the device with authentication-related metadata (7) associated with the device to produce a binding value;
    ii) convey the binding value to the hardware root of trust;
    iii) receive an output value from the hardware root of trust, wherein the output value generated by the hardware root of trust is characteristic of the hardware intrinsic properties of the hardware root of trust and of the binding value; and
    iv) create a proof token (14) as a function of non-sensitive metadata (11) and the output value generated at the hardware root of trust output, wherein the proof token is for use by a verifier to validate the non-sensitive metadata.

2.  The device of claim 1, wherein the processor is further configured to create the proof token using a zero knowledge proof (13).

3.  The device of claim 2, wherein the zero knowledge proof that the processor is configured to perform is non-interactive and includes a nonce that incorporates the non-sensitive metadata.

4.  The device of claim 2, wherein the authenticating zero knowledge proof that the processor is configured to perform is interactive.

5.  The device of claim 1, wherein the processor is configured to combine the device enrollment parameters with the authentication-related metadata using a cryptographic hash function (8).

6.  The device of claim 1, wherein the processor is configured to combine the device enrollment parameters with the authentication-related metadata using an iterative cryptographic hash function (8).

7.  The device of claim 1, wherein the authentication-related metadata that the processor is configured to combine with device enrollment parameters consists solely of sensitive metadata.

8.  The device of claim 1 or claim 7, wherein the proof token (14) that the processor is configured to create is a public identity token.

9.  The device of claim 1, wherein the device enrollment parameters that the processor is configured to combine with the authentication-related metadata include values pertaining to a cryptographic mathematical framework.

10. The device of claim 9, wherein the processor is further configured to perform elliptic curve cryptography.

11. The device of claim 10, wherein the values pertaining to a cryptographic mathematical framework include a challenge value, an elliptic curve base point, and a modulus.

12. The device of any preceding claim, wherein the processor is further configured to, in response to an authentication request from an external verifying entity, perform an authenticating zero knowledge proof (13) without conveying any sensitive metadata to the external verifying entity.

13. The device of any preceding claim, wherein the hardware root of trust is a physical unclonable function, PUF.

14. The device of claim 13, wherein the processor is configured to algorithmically combine device enrollment parameters that include a challenge value.

15. The device of any preceding claim, where in the non-sensitive metadata comprises at least one sensor output value.

16. A method of binding authentication-related metadata with hardware intrinsic properties of a device, the method comprising:

i) combining device enrollment parameters (6) associated with the device with authentication-related metadata associated with the device to produce a binding value;
ii) conveying the binding value to a hardware root of trust (9);
iii) receiving an output value from the hardware root of trust, wherein the output value generated by the hardware root of trust is characteristic of the hardware intrinsic properties of the hardware root of trust and of the binding value; and
iv) creating a proof token (14) as a function of non-sensitive metadata (11) and the output value generated at the hardware root of trust output, wherein the proof token is for use by a verifier to validate the non-sensitive metadata.

**Patentansprüche**

1. Vorrichtung, die konfiguriert ist, authentifizierungsbezogene Metadaten mit intrinsischen Hardware-Eigenschaften zu verbinden, wobei die Vorrichtung zugeordnete Vorrichtungsregistrierungsparameter (6) und zugeordnete authentifizierungsbezogene Metadaten besitzt, und umfasst:

a) einen Hardware-Vertrauensanker (9); und
b) einen Prozessor, der mit dem Hardware-Vertrauensanker verbunden ist, wobei der Prozessor konfiguriert ist zum:

i) Kombinieren von Vorrichtungsregistrierungsparametern, die der Vorrichtung zugeordnet sind, mit authentifizierungsbezogenen Metadaten (7), die der Vorrichtung zugeordnet sind, um einen Bindungswert zu erzeugen;
ii) Übermitteln des Bindungswerts an den Hardware-Vertrauensanker;
iii) Empfangen eines Ausgabewerts von dem Hardware-Vertrauensanker, wobei der Ausgabewert, der durch den Hardware-Vertrauensanker erzeugt wird, für die intrinsischen Hardware-Eigenschaften des Hardware-Vertrauensankers und den Bindungswert charakteristisch sind; und
iv) Erzeugen eines Nachweiszeichens (14) als eine Funktion nicht empfindlicher Metadaten (11) und des Ausgabewerts, der am Ausgang des Hardware-Vertrauensankers erzeugt wird, wobei das Nachweiszeichen zur Verwendung durch einen Überprüfer dient, um die nicht empfindlichen Metadaten zu validieren.

2. Vorrichtung nach Anspruch 1, wobei der Prozessor ferner konfiguriert ist, das Nachweiszeichen unter Verwendung eines Nullkenntnisnachweises (13) zu erzeugen.

3. Vorrichtung nach Anspruch 2, wobei der Prozessor konfiguriert ist, den Nullkenntnisnachweis auszuführen, der nicht interaktiv ist und eine Nonce enthält, die die nicht empfindlichen Metadaten enthält.

4. Vorrichtung nach Anspruch 2, wobei der Prozessor konfiguriert ist, den Authentifizierungsnullkenntnisnachweis auszuführen, der interaktiv ist.

5. Vorrichtung nach Anspruch 1, wobei der Prozessor konfiguriert ist, die Vorrichtungsregistrierungsparameter mit den authentifizierungsbezogenen Metadaten unter Verwendung einer kryptografischen Hash-Funktion (8) zu vereinigen.

6. Vorrichtung nach Anspruch 1, wobei der Prozessor konfiguriert ist, die Vorrichtungsregistrierungsparameter mit den authentifizierungsbezogenen Metadaten unter Verwendung einer iterativen kryptografischen Hash-Funktion (8) zu vereinigen.

**7.** Vorrichtung nach Anspruch 1, wobei der Prozessor konfiguriert ist, die authentifizierungsbezogenen Metadaten, die nur aus empfindlichen Metadaten bestehen, mit Vorrichtungsregistrierungsparametern zu vereinigen.

**8.** Vorrichtung nach Anspruch 1 oder Anspruch 7, wobei der Prozessor konfiguriert ist, das Nachweiszeichen (14) zu erzeugen, das ein öffentliches Identitätszeichen ist.

**9.** Vorrichtung nach Anspruch 1, wobei der Prozessor konfiguriert ist, die Vorrichtungsregistrierungsparameter, die Werte enthalten, die sich auf ein kryptografisches mathematisches Rahmenwerk beziehen, mit den authentifizierungsbezogenen Metadaten zu vereinigen.

**10.** Vorrichtung nach Anspruch 9, wobei der Prozessor ferner konfiguriert ist, eine Ellipsenkurvenkryptographie auszuführen.

**11.** Vorrichtung nach Anspruch 10, wobei die Werte, die sich auf ein kryptografisches mathematisches Rahmenwerk beziehen, einen Abfragewert, einen Ellipsenkurvenbasispunkt und einen Modul enthalten.

**12.** Vorrichtung nach einem vorhergehenden Anspruch, wobei der Prozessor ferner konfiguriert ist, als Reaktion auf eine Authentifizierungsanforderung von einer externen Prüfentität einen Authentifizierungsnullkenntnisnachweis (13) auszuführen, ohne empfindliche Metadaten an die externe Prüfentität zu übermitteln.

**13.** Vorrichtung nach einem vorhergehenden Anspruch, wobei der Hardware-Vertrauensanker eine physikalische, nicht klonbare Funktion, PUF, ist.

**14.** Vorrichtung nach Anspruch 13, wobei der Prozessor konfiguriert ist, Vorrichtungsregistrierungsparameter, die einen Abfragewert enthalten, algorithmisch zu vereinigen.

**15.** Vorrichtung nach einem vorhergehenden Anspruch, wobei die nicht empfindlichen Metadaten mindestens einen Sensorausgabewert umfassen.

**16.** Verfahren zum Verbinden authentifizierungsbezogener Metadaten mit intrinsischen Hardware-Eigenschaften einer Vorrichtung, wobei das Verfahren Folgendes umfasst:

    i) Kombinieren von Vorrichtungsregistrierungsparametern (6), die der Vorrichtung zugeordnet sind, mit authentifizierungsbezogenen Metadaten, die der Vorrichtung zugeordnet sind, um einen Bindungswert zu erzeugen;
    ii) Übermitteln des Bindungswerts an einen Hardware-Vertrauensanker (9);
    iii) Empfangen eines Ausgabewerts von dem Hardware-Vertrauensanker, wobei der Ausgabewert, der durch den Hardware-Vertrauensanker erzeugt wird, für die intrinsischen Hardware-Eigenschaften des Hardware-Vertrauensankers und den Bindungswert charakteristisch sind; und
    iv) Erzeugen eines Nachweiszeichens (14) als eine Funktion nicht empfindlicher Metadaten (11) und des Ausgabewerts, der am Ausgang des Hardware-Vertrauensankers erzeugt wird, wobei das Nachweiszeichen zur Verwendung durch einen Überprüfer dient, um die nicht empfindlichen Metadaten zu validieren.

## Revendications

**1.** Dispositif configuré pour lier les métadonnées liées à une authentification avec des propriétés intrinsèques de matériel, le dispositif ayant des paramètres d'inscription de dispositif associé (6) et des métadonnées liées à une authentification associées, et comprenant

    a) une racine matérielle de confiance (9) ; et
    b) un processeur connecté à la racine matérielle de confiance, le processeur configuré pour :

        i) combiner les paramètres d'inscription de dispositif associés au dispositif avec des métadonnées liées à une authentification (7) associées au dispositif pour produire une valeur de liaison ;
        ii) transmettre la valeur de liaison à la racine matérielle de confiance ;
        iii) recevoir une valeur de sortie de la racine matérielle de confiance, la valeur de sortie générée par la racine matérielle de confiance étant caractéristique des propriétés intrinsèques de matériel de la racine matérielle de confiance et de la valeur de liaison ; et

iv) créer un jeton de preuve (14) en fonction de métadonnées non sensibles (11) et de la valeur de sortie générée à la racine matérielle de sortie de confiance, le jeton de preuve étant destiné à être utilisé par un vérificateur pour valider des métadonnées non sensibles.

**2.** Dispositif selon la revendication 1, dans lequel le processeur est en outre configuré pour créer le jeton de preuve en utilisant une preuve de connaissance nulle (13).

**3.** Dispositif selon la revendication 2, dans lequel la preuve de connaissance nulle que le processeur est configuré pour effectuer est non interactive et comprend un nombre aléatoire à usage unique qui incorpore les métadonnées non sensibles.

**4.** Dispositif selon la revendication 2, dans lequel la preuve de connaissance nulle d'authentification que le processeur est configuré pour effectuer est interactive.

**5.** Dispositif selon la revendication 1, dans lequel le processeur est configuré pour combiner les paramètres d'inscription du dispositif avec les métadonnées liées à une authentification en utilisant une fonction de hachage cryptographique (8).

**6.** Dispositif selon la revendication 1, dans lequel le processeur est configuré pour combiner les paramètres d'inscription de dispositif avec des métadonnées liées à une authentification en utilisant une fonction de hachage cryptographique itérative (8).

**7.** Dispositif selon la revendication 1, dans lequel les métadonnées liées à une authentification que le processeur est configuré pour combiner avec les paramètres d'inscription de dispositif consistent uniquement en des métadonnées sensibles.

**8.** Dispositif selon la revendication 1 ou la revendication 7, dans lequel le jeton de preuve (14) que le processeur est configuré pour créer est un jeton d'identité publique.

**9.** Dispositif selon la revendication 1, dans lequel les paramètres d'inscription de dispositif que le processeur est configuré pour combiner avec les métadonnées liées à une authentification comprennent des valeurs appartenant à un cadre mathématique cryptographique.

**10.** Dispositif selon la revendication 9, dans lequel le processeur est en outre configuré pour effectuer une cryptographie à courbe elliptique.

**11.** Dispositif selon la revendication 10, dans lequel les valeurs appartenant à un cadre mathématique cryptographique comprennent une valeur de défi, un point de base de courbe elliptique, et un module.

**12.** Dispositif selon l'une quelconque des revendications précédentes, dans lequel le processeur est en outre configuré pour, en réponse à une demande d'authentification provenant d'une entité de vérification externe, effectuer une preuve de connaissance nulle d'authentification (13) sans transmettre de métadonnées sensibles à l'entité de vérification externe.

**13.** Dispositif selon l'une quelconque des revendications précédentes, dans lequel la racine matérielle de confiance est une fonction physique non clonable, PUF.

**14.** Dispositif selon la revendication 13, dans lequel le processeur est configuré pour combiner de manière algorithmique des paramètres d'inscription de dispositif qui comprennent une valeur de défi.

**15.** Dispositif selon l'une quelconque des revendications précédentes, dans lequel les métadonnées non sensibles comprennent au moins une valeur de sortie de capteur.

**16.** Procédé de liaison de métadonnées liées à l'authentification avec des propriétés intrinsèques de matériel d'un dispositif, le procédé comprenant les étapes consistant à :

i) combiner des paramètres d'inscription de dispositif (6) associés au dispositif avec des métadonnées liées à une authentification associées au dispositif pour produire une valeur de liaison ;

ii) transmettre la valeur de liaison à une racine matérielle de confiance (9) ;

iii) recevoir une valeur de sortie de la racine matérielle de confiance, la valeur de sortie générée par la racine matérielle de confiance étant caractéristique des propriétés intrinsèques de matériel de la racine matérielle de confiance et de la valeur de liaison ; et

iv) créer un jeton de preuve (14) en fonction de métadonnées non sensibles (11) et de la valeur de sortie générée au niveau de la racine matérielle de sortie de confiance, dans lequel le jeton de preuve est destiné à être utilisé par un vérificateur pour valider les métadonnées non sensibles.

(1)

Enrollment Parameters
-    Challenge
-    Cryptographic Parameters
-    ...

(2)

Private Information
-    Username, Password
-    PIN
Biometrics
-    Fingerprint
-    Voice Print
-    Iris Scan
-    ...

(3)

Cryptographic
Hash
Function

(4)

Physical
Unclonable
Function

(5)

Enrollment
Token

**Fig. 1**

(6)

Enrollment Parameters
- Challenge
- Cryptographic Parameters
- ...

(7)

Private Information
- Username, Password
- PIN
Biometrics
- Fingerprint
- Voice Print
- Iris Scan
- ...

(8)

Cryptographic
Hash
Function

(10)

Proof Parameters
- Challenge
- Cryptographic Parameters
- Nonce
- ...

(9)

Physical
Unclonable
Function

(12)

Cryptographic
Hash
Function

(13)

Zero
Knowledge
Proof

(11)

Sensor Output
- GPS
- Temperature, Pressure,...
- Gyroscope
- ...

(14)

Proof
Token

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62017045 B
- US 14704963 B
- US 8577091 B, Ivanov
- US 8566579 B, Armstrong
- US 20110002461, Erhart

### Non-patent literature cited in the description

- Modeling Attacks on Physical Unclonable Functions. **RÜHRMAIR et al.** Proceedings of the 17th ACM conference on Computer and communications security, CCS '10. ACM, 2010, 237-249
- **HOLCOMB et al.** Initial SRAM State as a Fingerprint and Source of True Random Numbers for RFID Tags. *Proceedings of the Conference on RFID Security,* 2007
- **KUMAR et al.** Extended abstract: The Butterfly PUF Protecting IP on Every FPGA. *IEEE International Workshop on Hardware-Oriented Security and Trust,* 2008, 67-70
- **LEE et al.** A technique to build a secret key in integrated circuits for identification and authentication applications. *IEEB Symposium on VLSI Circuits: Digest of Technical Papers,* 2004, 176-179
- Physical Unclonable Functions for Device Authentication and Secret Key Generation. **SUH et al.** Proceedings of the 44th annual Design Automation Conference, DAC '07. ACM, 2007, 9-14
- Read-Proof Hardware from Protective Coatings. **TUYLS et al.** Proceedings of the 8th international conference on Cryptographic Hardware and Embedded Systems. Springer, 2006, 369-383
- Applications of High-Capacity Crossbar Memories in Cryptography. *IEEE Trans. Nanotechnol.,* 2011, vol. 10 (3), 489-498
- A Fuzzy Commitment Scheme. **JUELS et al.** Proceedings of the 6th ACM conference on Computer and Communications Security, CCS '99. ACM, 1999, 28-36
- **DODIS et al.** Fuzzy Extractors: How to Generate Strong Keys from Biometrics and Other Noisy Data. *SIAMJ. Comput.,* 2008, vol. 38 (1), 97-139
- **HORI et al.** Quantitative and Statistical Performance Evaluation of Arbiter Physical Unclonable Functions on FPGAs. *2010 International Conference on Reconfigurable Computing and FPGAs (ReConFig),* 2010, 298-303
- **MAITI.** A Systematic Approach to Design an Efficient Physical Unclonable Function. *Virginia Tech,* 2012
- Robust Authentication using Physically Unclonable Functions. **FRIKKEN et al.** Information Security, volume 5735 of Lecture Notes in Computer Science. Springer, 2009, vol. 5735, 262-277
- D1.1 Report on use case and architecture requirements. Holistic Approaches for Integrity of ICT-Systems. 2013
- REAR. **SAM KERR et al.** Security and Privacy in GIS and LBS. ACM, 02 November 2010, 18-25
- An Improved Protocol for Demonstrating Possession of Discrete Logarithms and some Generalizations. **CHAUM et al.** Proceedings of the 6th annual international conference on Theory and application of cryptographic techniques, EUROCRYPT'87. Springer, 1988, 127-141